# EUROPÄISCHE PATENTSCHRIFT

(11) **EP 2 527 795 B1**
(45) Veröffentlichungstag und Bekanntmachung des Hinweises auf die Patenterteilung: **05.09.2018**
(21) Anmeldenummer: 12003966.4
(22) Anmeldetag: 21.05.2012
(51) Int. Cl.: G01D 5/20, G01B 7/00, G01B 7/02, G01B 7/30

(54) **Positionssensor, Aktor-Sensor-Vorrichtung und Verfahren zur induktiven Erfassung einer Position**
Position sensor, actuator-sensor device and method for inductive detection of a position
Capteur de position, dispositif de capteur-actionneur et procédé de détection inductive d'une position

(30) Priorität: 23.05.2011 DE 102011102796
(43) Veröffentlichungstag der Anmeldung: 28.11.2012
(73) Patentinhaber: TRW Automotive Electronics & Components GmbH, 78315 Radolfzell (DE)
(72) Erfinder: Backes, Ulrich, 78315 Radolfzell (DE)
(74) Vertreter: Prinz & Partner mbB

(56) Entgegenhaltungen:
- DE-A1- 1 762 565
- DE-A1- 3 734 177
- DE-A1- 19 903 750
- DE-C1- 3 440 538
- FR-A1- 2 664 972

## Beschreibung

Die Erfindung betrifft einen Positionssensor zur induktiven Erfassung einer Position eines eine Referenzspule umfassenden ersten Bauteils bezüglich eines einen Referenzkörper umfassenden zweiten Bauteils. Außerdem betrifft die Erfindung eine Aktor-Sensor-Vorrichtung sowie ein Verfahren zur induktiven Erfassung einer Position eines Referenzkörpers bezüglich einer Referenzspule.

Berührungslos arbeitende Positionssensoren kommen in vielen Bereichen der Technik zum Einsatz. Kontaktlose Positionssensoren werden in der Automobiltechnik beispielsweise als kontaktverschleißfreie Drehschalter oder Taster insbesondere für Lichtdrehschalter eingesetzt. Solche Positionssensoren arbeiten unter Einsatz verschiedener physikalischer Messprinzipien. Beispiele sind eine optische, kapazitive oder potenziometrische Messung. Die erwähnten Sensoren lassen sich jedoch lediglich mit vergleichsweise hohen Kosten realisieren, weisen zudem eine zu große Baugröße auf und sind lediglich mit einem hohen Montageaufwand zu integrieren. Kapazitiv arbeitende Sensoren sind außerdem empfindlich gegen Feuchte.

DE 1 762 565 A1, DE 37 34 177 A1, DE 199 03 750 A1, DE 34 40 538 C1 und FR 2 664 972 A1 zeigen jeweils eine bei einem Näherungssensor verwendbare Erregungsschaltung, die einen elektrischen Schwingkreis aufweist, der eine Spule und einen mit der Spule gekoppelten Kondensator umfasst.

Aufgabe der Erfindung ist es, einen Positionssensor, eine Aktor-Sensor-Vorrichtung sowie ein Verfahren zur induktiven Erfassung einer Position bereitzustellen, welcher/welches im Hinblick auf die im Stand der Technik bekannten Probleme verbessert ist.

Die Aufgabe wird erfindungsgemäß durch einen Positionssensor gemäß Anspruch 1, eine Aktor-Sensor-Vorrichtung nach Anspruch 11 sowie ein Verfahren nach Anspruch 13 gelöst.

Gemäß der vorliegenden Erfindung wird ein Positionssensor zur induktiven Erfassung einer Position eines eine Referenzspule umfassenden ersten Bauteils bezüglich eines einen Referenzkörper umfassenden zweiten Bauteils angegeben. Bevorzugt sind das erste und das zweite Bauteil integraler Bestandteil eines Positionssensors. Bei dem Positionssensor kann es sich um einen Drehwinkelgeber, einen Linearpositionsgeber oder um einen Näherungssensor, z.B. einen Drucktaster handeln. Ein bevorzugter Drehwinkelgeber ist ein kontaktloser Drehlichtschalter, z.B. für ein KFZ. Der Positionssensor umfasst außerdem eine Steuer- und Verarbeitungseinheit, bei welcher es sich bevorzugt um einen Mikrocontroller handeln kann.

Die Steuer- und Verarbeitungseinheit weist einen Eingang und einen Ausgang auf, die jeweils an die Referenzspule gekoppelt sind. Die Steuer- und Verarbeitungseinheit ist zur Abgabe eines einen Stromstoß in der Referenzspule erzeugenden Ausgangssignals ausgelegt. Außerdem ist die Steuer- und Verarbeitungseinheit dazu ausgelegt, eine durch diesen Stromstoß in der Referenzspule verursachte gedämpfte Schwingung auszuwerten und als ein die Position des Referenzkörpers bezüglich der Referenzspule anzeigendes Eingangssignal zu verwenden. Die Auswertung der in der Referenzspule verursachten Schwingung kann z.B. mit Hilfe eines entsprechend programmierten Mikrocontrollers erfolgen.

Der Positionssensor gemäß den zuvor genannten Aspekten der Erfindung beruht auf dem physikalischen Effekt, dass in dem vorzugsweise metallisch leitfähigen Referenzkörper, welcher von dem Magnetfeld der Referenzspule durchsetzt wird, Wirbelstromverluste induziert werden und diese einen Energieverlust des Magnetfeldes nach sich ziehen. Durch den eintretenden Energieverlust verringert sich die Spulenspannung, welche als ein die Position des Referenzkörpers bezüglich der Referenzspule angebendes Eingangssignal detektiert werden kann.

Gemäß Aspekten der Erfindung wird in der Referenzspule ein Stromstoß erzeugt und der auftretende Energieverlust des Magnetfeldes anhand der resultierenden Schwingung detektiert. Es wurde erkannt, dass es aufgrund von parasitären Kapazitäten der äußeren Beschaltung und der Referenzspule in dieser zu einer gedämpften Schwingung kommt und dieser Effekt zur induktiven Positionserfassung ausgenutzt werden kann. Gegenüber aus dem Stand der Technik bekannten Lösungen weist der Positionssensor gemäß Aspekten der Erfindung den Vorteil auf, dass die Referenzspule kleiner dimensioniert werden kann. Außerdem kann ein geringerer Spulenanregungsstrom und eine kleinere Anregungsfrequenz verwendet werden. Dies ist insbesondere im Hinblick auf die elektromagnetische Verträglichkeit (EMV) des Positionssensors vorteilhaft.

Die Steuer- und Verarbeitungseinheit kann außerdem dazu ausgelegt sein, eine Amplitude der durch den Stromstoß in der Referenzspule erzeugten Schwingung auszuwerten. Die Höhe dieser Amplitude kann als ein Maß für den durch den Referenzkörper verursachten Energieverlust gelten. Eine Auswertung der Amplitude als ein die Position des Referenzkörpers anzeigendes Eingangssignal stellt daher eine besonders effektive Lösung dar.

Gemäß weiteren Aspekten der Erfindung ist der Ausgang der Steuer- und Verarbeitungseinheit mit einer Seite der Referenzspule über einen ersten Knoten gekoppelt. Bevorzugt ist die andere Seite der Referenzspule an ein festes Referenzpotenzial, z.B. an Masse, gekoppelt. Außerdem kann eine Diode in Durchlassrichtung zwischen den ersten Knoten und einen zweiten Knoten geschaltet sein, welcher außerdem mit dem Eingang der Steuer- und Verarbeitungseinheit gekoppelt sein kann. Ein Kondensator kann zwischen den zweiten Knoten und ein festes Referenzpotenzial (bevorzugt Masse) gekoppelt sein. Dieser Kondensator kann ein Teil der Auswerte- und Verarbeitungseinheit sein; es kann sich jedoch auch um ein separates Bauteil handeln.

Bei aus dem Stand der Technik bekannten Lösungen, die sich eines ähnlichen Messprinzips bedienen, ist es stets notwendig, dass der Spulenanregungsstrom bzw. die Anregungsfrequenz zumindest eine gewisse Größe aufweisen und außerdem eine hinreichend große Induktivität verwendet wird. Anderenfalls kann eine zufriedenstellende Empfindlichkeit der Messvorrichtung nicht erreicht werden. Insbesondere aus EMV-Gründen ist dies jedoch meist unpraktikabel. Außerdem müssen oftmals gewickelte Spulen eingesetzt werden, was einen Kostennachteil bedeutet. Der Positionssensor gemäß Aspekten der Erfindung überwindet diese Nachteile, denn zur Auswertung der Schwingung in der Referenzspule kann eine vergleichsweise geringe Induktivität und kleine Anregungsfrequenz verwendet werden. Außerdem kann auf eine gewickelte Spule verzichtet werden. Es ist möglich, eine in eine Leiterplatte integrierte Flachspule aus Leiterbahnen, oder eine in MID-Technik hergestellte Flachspule als Referenzspule zu verwenden.

Zur Auswertung der in der Referenzspule erzeugten gedämpften Schwingung werden die positiven Halbwellen dieser Schwingung über die Diode gleichgerichtet. Die positiven Spannungsspitzen laden den Kondensator. Die über den Kondensator anfallende Spannung kann gemäß dieser besonders einfachen und kostengünstigen Ausführungsform als Eingangssignal am Eingang der Steuer- und Verarbeitungseinheit detektiert werden und dient als ein die Position zwischen dem Referenzkörper und der Referenzspule angebendes Eingangssignal. Es wurde festgestellt, dass zu diesem Zweck ein Kondensator geringer Kapazität eingesetzt werden kann, wie er z.B. in handelsüblichen Mikrokontrollern bereits integriert ist. Bevorzugt hat dieser eine geringe Kapazität, z.B. zwischen 10 und 20 pF.

Ändert sich der Abstand des Referenzkörpers zu der Referenzspule, so ändert sich der durch die Wirbelstromverluste in dem Referenzkörper verursachte Energieverlust des Feldes der Referenzspule. Dies führt zu einer Änderung der an dem Kondensator anfallenden Spannung. In verschiedenen aufeinanderfolgenden Messzyklen kann so der sich verändernde Abstand zwischen Referenzkörper und Referenzspule erfasst werden.

Der in die Referenzspule von der Steuer- und Verarbeitungseinheit eingekoppelte Stromstoß kann gemäß einem weiteren Aspekt der Erfindung im Wesentlichen durch einen Widerstand definiert werden, welcher zwischen den ersten Knoten und den Ausgang der Steuer- und Verarbeitungseinheit gekoppelt ist. Der Widerstand wird entsprechend der Strombelastbarkeit des Ausgangs dimensioniert, bevorzugt zwischen 150 Ohm und 1000 Ohm.

Gemäß einem weiteren Aspekt der Erfindung kann ein erster Schalter, bei dem es sich bevorzugt um einen Transistor, z.B. einen MOSFET, handelt, zwischen die Diode und den zweiten Knoten geschaltet sein. Dieser zweite Schalter erlaubt es den Kondensator für den Zeitraum des Stromstoßes von der Referenzspule zu trennen. Außerdem kann ein zweiter Schalter, bei welchem es sich wiederum bevorzugt um einen Transistor wie beispielsweise einen MOSFET handeln kann, zwischen den zweiten Knoten und ein festes Referenzpotenzial, vorzugsweise Masse, gekoppelt sein. Durch Öffnen des ersten und Schließen des zweiten Schalters kann der Kondensator vor jedem neuen Messzyklus entladen werden, so dass ein definierter Ausgangszustand vorliegt. Während der Erfassung der positiven Halbwellen der in der Referenzspule auftretenden gedämpften Schwingungen kann der zweite Schalter geöffnet und der erste Schalter geschlossen sein, sodass Ladung über die Diode auf den Kondensator fließen kann. Bevorzugt handelt es sich bei der Diode um eine Schottky-Diode. Dieser Diodentyp zeichnet sich durch eine geringe Durchlassspannungen und kurze Schaltzeiten (im Bereich von 100 ps) aus und ist somit zur Erfassung der auftretenden positiven Halbwellen der gedämpften Schwingung auch bei hohen Schwingungsfrequenzen geeignet.

Gemäß einem weiteren Aspekt der Erfindung ist der Ausgang der Steuer- und Verarbeitungseinheit ein digitaler Ausgang, an welchem bevorzugt ein Rechtecksignal anliegt. Die steigende und fallende Flanke dieses Rechtecksignals erzeugt einen Stromstoß in der Referenzspule, wobei die Anstiegsgeschwindigkeit der Flanken maßgeblich die erreichbare Empfindlichkeit bestimmt. Der zur Erfassung genutzte Eingang der Steuer- und Verarbeitungseinheit ist bevorzugt mit einem von dieser umfassten A/D-Wandler gekoppelt. Die an dem Kondensator anfallende Spannung kann so unmittelbar in einen digitalen Wert umgewandelt werden kann, der zur digitalen Weiterverarbeitung bereitsteht.

Ein weiterer vorteilhafter Positionssensor umfasst eine oder mehrere Referenzspulen, die in gleicher Art und Weise wie oben erwähnt mit den übrigen Bauteilen des Positionssensors gekoppelt sind. Dabei ist auch eine Reihenschaltung mehrerer Spulen denkbar.

Die Wicklungen dieser Referenzspule(n) können so geführt sein, dass diese einen Spulenkern definieren, der die Form des erzeugten Magnetfeldes derart bestimmt, dass bevorzugt eine laterale Verschiebung des Referenzkörpers (d.h. eine Verschiebung parallel zur Ebene, in welcher sich die Spule erstreckt) oder eine vertikale Verschiebung des Referenzkörpers (d.h. eine Verschiebung des Referenzkörpers senkrecht zur Erstreckungsebene der Spule) detektierbar ist. Mit anderen Worten wird die Form des Magnetfeldes so eingerichtet, dass eine geringe Veränderung der Position des Referenzkörpers in die eine oder andere Richtung eine entsprechend starke Veränderung des auf den Referenzkörper einwirkenden und von der Referenzspule erzeugten Magnetfeldes mit sich bringt. Diese ortsabhängige Veränderung des Magnetfeldes führt zu einer entsprechend starken Änderung der induzierten Wirbelströme. Bevorzugt weist der Spulenkern (wobei auch eine Luftspule umfasst ist) der Referenzspule eine kleine Querschnittsfläche auf. Es entsteht ein nadelförmiges Magnetfeld, das einen starken Gradienten in lateraler Richtung aufweist. Somit ist bevorzugt eine laterale Verschiebung des Referenzkörpers detektierbar. Gemäß einem anderen Aspekt ist die Referenzspule so ausgestaltet, dass deren Spulenkern eine längliche Querschnittsfläche aufweist. Eine laterale Verschiebung des Referenzkörpers führt in diesem Fall zu einer proportionalen Veränderung des Eingangssignals. Die längliche Querschnittsfläche kann linienförmig oder gekrümmt sein, sich z.B. entlang eines Kreisbogensegments erstrecken. Im letzten Fall kommt es zu einem ringförmigen Feldaustritt, der für die Konstruktion von Drehwinkelsensoren, wie sie z.B. in kontaktlosen Drehlichtschaltern eingesetzt werden, besonders geeignet ist. Ein weiterer Positionssensor kann eine Referenzspule aufweisen, welche einen Spulenkern mit verhältnismäßig großer Querschnittsfläche aufweist. Nun kommt es zu einem quadratischen Feldaustritt. Ein solches Magnetfeld weist einen starken Gradienten in senkrechter Richtung auf. Bevorzugt kann somit eine vertikale Verschiebung des Referenzkörpers bezüglich der Referenzspule detektiert werden. Diese Anordnung ist insbesondere zur Realisierung eines Tastschalters geeignet, bei dessen Betätigung sich der Referenzkörper der Referenzspule (oder auch umgekehrt) nähert.

Bei Positionsgeberanwendungen in sicherheitsrelevanten Bereichen, z.B. für Kfz-Lichtschalter, müssen mindestens zwei physikalisch verschiedene Positionserfassungsmethoden verwendet werden. Ein weiterer Positionssensor gemäß Aspekten der Erfindung wird dieser Anforderung gerecht und weist eine weitere Einheit zur Erfassung der Position zwischen dem ersten und dem zweiten Bauteil auf, wobei die von der weiteren Einheit durchgeführte Erfassung auf einem von einer induktiven Positionserfassung verschiedenen physikalischen Messprinzip beruht. Bevorzugt wird eine kapazitive Positionserfassung eingesetzt.

Gemäß einem weiteren Aspekt der Erfindung wird eine Aktor-Sensor-Vorrichtung angegeben, die einen Positionssensor gemäß vorgenannten Aspekten der Erfindung und zusätzlich einen Aktor umfasst. Als ein erstes von zwei gegeneinander wirkenden Teilen des Aktors ist ein Permanentmagnet in das zweite Bauteil integriert. Das Magnetfeld dieses Permanentmagneten durchsetzt die in das erste Bauteil integrierte Referenzspule, welche als ein zweites der gegeneinander wirkenden Teile des Aktors verwendet wird. Außerdem kann ein Schalter, z.B. ein MOSFET, zwischen eine Versorgungsspannung und den ersten Knoten geschaltet werden. In diesem Fall wird der Kanal des MOSFETs einerseits mit der Versorgungsspannung und andererseits mit dem ersten Knoten gekoppelt. Die Steuer- und Auswerteeinheit kann außerdem einen weiteren Ausgang aufweisen, der zur Steuerung des Schalters mit diesem gekoppelt ist. Wird ein MOSFET eingesetzt, so ist dieser weitere Ausgang mit dessen Gate gekoppelt.

Die Steuer- und Verarbeitungseinheit ist bevorzugt zur rückgekoppelten Regelung des Aktors ausgelegt. Dieser wird in Reaktion auf eine von dem Positionssensor bestimmte Position zwischen dem ersten und zweiten Bauteil gesteuert. Mit einer solchen Aktor-Sensor-Vorrichtung kann vorteilhaft ein Taster mit haptischer Rückmeldung konstruiert werden. So kann z.B. eine Vibrations- oder Kraftrückmeldung erfolgen. Durch wechselweises Ansteuern der Referenzspule mit einem stärkeren niederfrequenten Strom einerseits (Aktivierung des Aktors) und einem schwächeren höherfrequenten Strom andererseits (Aktivierung des Sensors) lässt sich ein sehr kompakter und kostengünstiger Drucktaster mit haptischer Rückmeldung realisieren.

Gemäß einer weiteren Ausführungsform wird ein Verfahren zur induktiven Erfassung einer Position eines eine Referenzspule umfassenden ersten Bauteils bezüglich eines einen Referenzkörper umfassenden zweiten Bauteils angegeben. Zunächst wird ein einen Stromstoß in der Referenzspule erzeugendes Ausgangssignals in die Referenzspule eingekoppelt. Dieser Stromstoß verursacht eine gedämpfte.

Schwingung in der Referenzspule, welche wiederum als ein die Position des Referenzkörpers bezüglich der Referenzspule anzeigendes Eingangssignal ausgewertet wird. Bevorzugt wird die Amplitude der durch den Stromstoß in der Referenzspule erzeugten Schwingung ausgewertet. Die Auswertung der Schwingung erfolgt bevorzugt mit Hilfe eines entsprechend konfigurierten Mikrocontrollers.

Ein weiteres Verfahren zur induktiven Positionserfassung verwendet eine Steuer- und Verarbeitungseinheit deren Eingang zum Empfang des die Position anzeigenden Eingangssignals an die Referenzspule gekoppelt ist. Der Ausgang der Steuer- und Verarbeitungseinheit und eine Seite der Referenzspule sind an einen ersten Knoten gekoppelt. Eine Diode kann in Durchlassrichtung zwischen den ersten Knoten und einen mit dem Eingang gekoppelten zweiten Knoten geschaltet sein und ein Kondensator kann zwischen den zweiten Knoten und ein festes Referenzpotenzial gekoppelt sein. Vorteilhaft kann sich bei dieser Ausführungsform der Schritt des Auswertens auf eine Auswertung der über dem Kondensator anfallenden Spannung beschränken. Diese Spannung dient bereits als ein die Position des Referenzkörpers bezüglich der Referenzspule anzeigendes Eingangssignal.

Weitere mit dem Verfahren gemäß Aspekten der Erfindung verbundene Vorteile sind bereits im Hinblick auf den Positionssensor gemäß Aspekten der Erfindung erwähnt und bedürfen daher keiner weiteren Erläuterung.

Weitere Merkmale und Vorteile der Erfindung ergeben sich aus der folgenden Beschreibung vorteilhafter Ausführungsbeispiele unter Bezugnahme auf die beigefügte Zeichnung. Dabei zeigt deren:
- Figur 1 ein vereinfachtes Schaltbild eines Positionssensors gemäß einem Ausführungsbeispiel,
- Figur 2 einen zeitabhängigen Verlauf der an einem ersten Ausgang, an einer Referenzspule und an einem Kondensator anliegenden Spannung,
- die Figuren 3 bis 6 verschiedene Ausführungsbeispiele für Referenzspulen,
- Figur 7 einen als Drehwinkelsensor ausgestalteten Positionssensor gemäß einem weiteren Ausführungsbeispiel,
- Figur 8 einen winkelabhängigen Signalverlauf dieses Drehwinkelgebers,
- Figur 9 einen weiteren als Drehwinkelgeber ausgestalteten Positionssensor gemäß einem Ausführungsbeispiel,
- Figur 10 ein vereinfachtes Schaltbild einer Aktor-Sensor-Vorrichtung gemäß einem Ausführungsbeispiel,
- Figur 11 einen schematischen Querschnitt durch diese Aktor-Sensor-Vorrichtung, und
- die Figuren 12 und 13 eine perspektivische Ansicht dieser Aktor-Sensor-Vorrichtung von deren Ober- bzw. Unterseite.

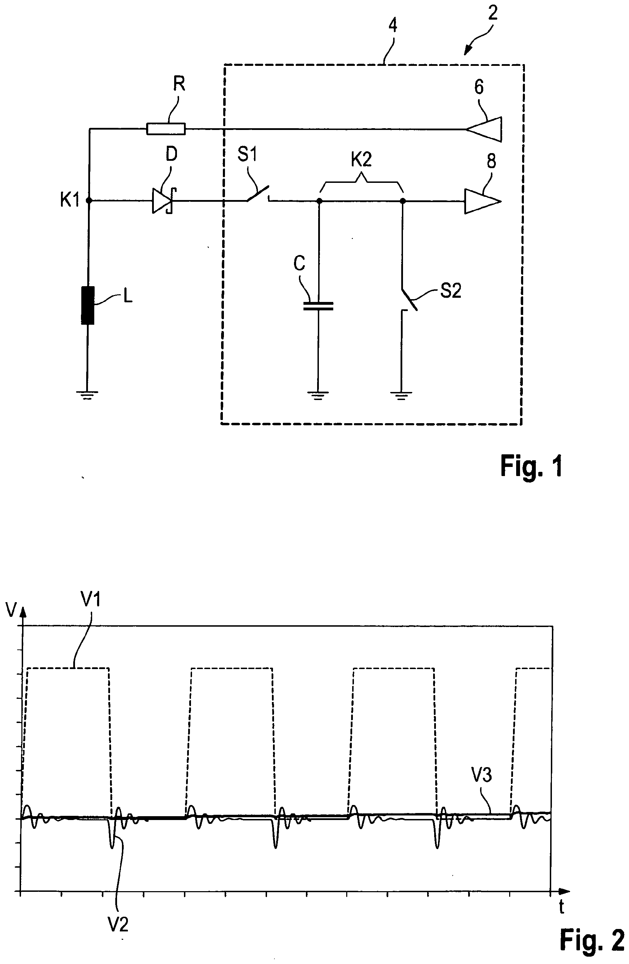

Figur 1 zeigt ein vereinfachtes Schaltbild eines Positionssensors 2, der eine Steuer- und Verarbeitungseinheit 4, mit einem Ausgang 6, bevorzugt einem Digitalausgang, und mit einem Eingang 8, der beispielsweise an einen A/D-Wandler gekoppelt ist, aufweist. Im Folgenden wird beispielhaft angenommen, dass es sich bei der Steuer- und Verarbeitungseinheit 4 um einen Mikrocontroller 4 handelt. Dessen Ausgang 6 ist über einen Widerstand R mit einem ersten Knoten K1 gekoppelt, mit welchem außerdem eine erste Seite einer Referenzspule L gekoppelt ist, deren andere Seite auf einem festen Referenzpotenzial, in diesem Fall auf Masse, liegt. Mit dem ersten Knoten K1 ist außerdem eine Diode D verbunden, die als Gleichrichterdiode wirkt und bei der es sich vorzugsweise um eine Schottky-Diode handelt. Die Diode D ist in Durchlassrichtung zwischen den ersten Knoten K1 und einen zweiten Knoten K2 geschaltet. In diese Verbindung ein erster Schalter S1, integriert. Mit dem zweiten Knoten K2 sind außerdem ein Kondensator C mit einer Kapazität zwischen 10 und 20 pF und ein zweiter Schalter S2 gekoppelt. Als Schalter S1, S2 werden bevorzugt MOSFETs eingesetzt. Die jeweils andere Seite des Kondensators C und des zweiten Schalters S2 ist an ein festes Referenzpotenzial, im dargestellten Ausführungsbeispiel an Masse gekoppelt. Abweichend von dem in Figur 1 dargestellten Ausführungsbeispiel können sowohl der Kondensator C als auch der erste und zweite Schalter S1, S2 als separate Bauteile also außerhalb des Mikrocontrollers 4 liegend ausgeführt sein. Der Positionssensor 2 umfasst außerdem einen nicht dargestellten Referenzkörper, der von dem von der Referenzspule L erzeugten Magnetfeld durchsetzt ist. Der Referenzkörper besteht bevorzugt aus einem elektrisch leitfähigen Material, z.B. aus Metall. Bei der Referenzspule L handelt es sich bevorzugt um eine in eine Leiterplatte integrierte Flachspule, oder einer Flachspule in MID-Technik.

Am Ausgang 6 des Mikrocontrollers 4 liegt beispielsweise die in Figur 2 gezeigte Rechteckspannung V1 an. Diese erzeugt an ihren steigenden und fallenden Flanken einen Stromstoß in der Referenzspule L, dessen Stärke im Wesentlichen durch die Größe des Widerstands R bestimmt ist. Aufgrund parasitärer Kapazitäten der Referenzspule L kommt es in dieser zu einer gedämpften Schwingung, deren Spannungsverlauf in Figur 2 als V2 dargestellt ist. Die positiven Halbwellen der Spannung V2 werden durch die Diode D gleichgerichtet und laden bei geschlossenem ersten Schalter S1 und geöffnetem zweiten Schalter S2 den Kondensator C. Die Aufladung des Kondensators C erfolgt an der steigen und fallenden Flanke der Rechteckspannung V2. Folglich steigt die an dem Kondensator anliegenden Spannung V3 bei jeder steigenden und fallenden Flanke der Rechteckspannung V1 um einen geringen Wert. Da der Kondensator C nur eine geringe Kapazität (ca. 10 bis 20 pF) aufweist, führen bereits wenige Ein- und Ausschaltzyklen zu einer Aufladung des Kondensators C auf den Spitzenwert der an der Referenzspule L anliegenden Spannung V2 abzüglich der Diodenvorspannung der Diode D. Die über den Kondensator C abfallende Spannung V3 kann am Eingang 8 des Mikrocontrollers 4 gemessen werden.

Nach der Messung wird der erste Schalter S1 geöffnet und der zweite Schalter S2 geschlossen, um den Kondensator C zu entladen und für einen neuen Messzyklus vorzubereiten. Wird der Kondensator C als diskretes Bauteil außerhalb des Mikrocontrollers 4 ausgeführt, können auch größere Kapazitäten verwendet werden, wodurch der erste Schalter S1 entfallen kann.

Befindet sich in dem von der Referenzspule L erzeugten Magnetfeld ein Referenzkörper, so werden in diesem Wirbelströme induziert. Diese führen zu Energieverlusten und zu einer Verringerung der Spannung V2 in der Referenzspule L. Folglich wird auch der Kondensator C weniger stark geladen. Die Differenz zwischen der maximalen Ladespannung des Kondensators C und der tatsächlich gemessenen Spannung ist indikativ für die Größe der Energieverluste und damit auch für die Position des Referenzkörpers. Somit kann erfasst werden, wie stark sich der Referenzkörpers an die Referenzspule L angenähert hat bzw. welche Absolutposition der Referenzkörper hat.

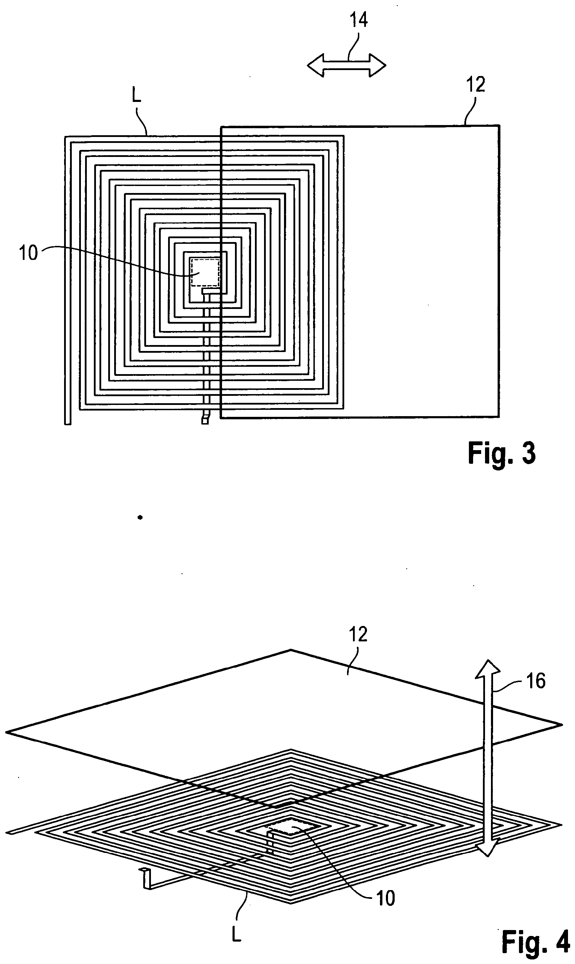

Figur 3 zeigt ein erstes Ausführungsbeispiel für eine als Flachspule ausgeführte Referenzspule L. Diese weist eine zentrale Fläche 10 auf, die den Querschnitt eines Spulenkerns definiert. Die in Figur 3 gezeigte Referenzspule L weist keinen separaten Spulenkern auf, es handelt sich im Wesentlichen um eine Luftspule. Das aus der Mitte der Referenzspule L austretende magnetische Feld ist im Wesentlichen nadelförmig und weist in einer Richtung lateral zu einer Ausdehnungsebene der Referenzspule L einen hohen Feldgradienten auf. Wird nun ein Referenzkörper 12 in lateraler Richtung 14, z.B. in Figur 3 nach links oder rechts verschoben, so bricht die an dem Kondensator C detektierbare Spannung V3 auf ein Minimum zusammen, sobald die Kante des Referenzkörpers 12 mit dem durch die zentrale Fläche 10 definierten Feldaustrittsfenster überlappt. Bei weiterem Verschieben bleibt sie auf diesem geringen Wert. Somit eignet sich die gezeigte Geometrie der Referenzspule L bevorzugt für Schaltanwendungen mit zwei Zuständen.

Figur 4 zeigt ein weiteres Ausführungsbeispiel für eine Referenzspule L, die im Vergleich zu der in Figur 3 gezeigten Referenzspule L eine größere zentrale Fläche 10 aufweist, sodass ein im Wesentlichen quadratischer Feldaustritt erreicht werden kann. Diese Referenzspule L eignet sich insbesondere zur Näherungserkennung des Referenzkörpers 12 in einer vertikalen Richtung 16. Die Stärke des von der Referenzspule L erzeugten Magnetfeldes nimmt mit zunehmender Entfernung des Referenzkörpers 12 von der Referenzspule L in vertikaler Richtung 16 ab, sodass mit sinkenden induzierten Wirbelströmen auch die an dem Kondensator C detektierbare Spannung V3 abnimmt.

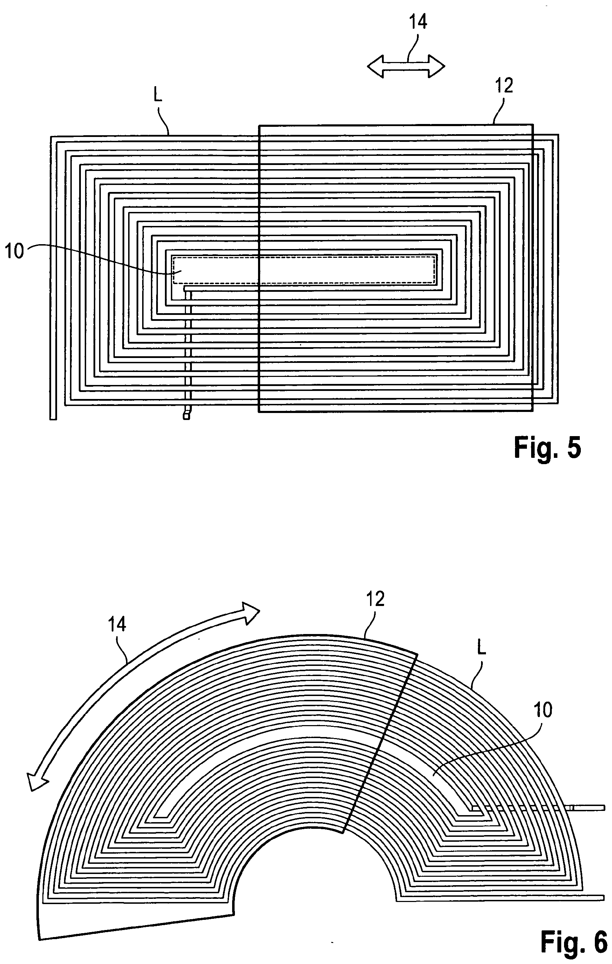

Figur 5 zeigt ein weiteres Ausführungsbeispiel für eine Referenzspule L, deren Wicklungen so ausgeführt sind, dass eine längliche lineare zentrale Fläche 10 entsteht. Es wird ein im Wesentlichen linienförmiger Feldaustritt definiert. Die Feldlinien des erzeugten Magnetfeldes sind im Bereich der zentralen Fläche 10 im Wesentlichen gleichmäßig verteilt. Somit ergibt sich ein linearer Zusammenhang zwischen der Verschiebung des Referenzkörpers 12 in einer lateralen Richtung 14 und der an dem Kondensator C detektierbaren Spannung V3. Eine alternative Ausgestaltung zeigt Figur 6, bei der die Referenzspule L eine zentrale Fläche 10 aufweist, der sich entlang eines Kreissegmentes erstreckt. Es ergibt sich ein im Wesentlichen ringförmiger Feldaustritt des von der Referenzspule L erzeugten magnetischen Feldes. Analog zu dem Ausführungsbeispiel in Figur 5 liegt ein linearer Zusammenhang zwischen dem am Eingang 8 des Mikrocontrollers 4 detektierbaren Signal und der Drehung des Referenzkörpers 12 entsprechend der Richtung 14 vor. Ein Positionssensor 2, mit einer Referenzspule L, wie sie Figur 6 zeigt, eignet sich bevorzugt zur Konstruktion eines Drehwinkelsensors, z.B. für einen Drehlichtschalter.

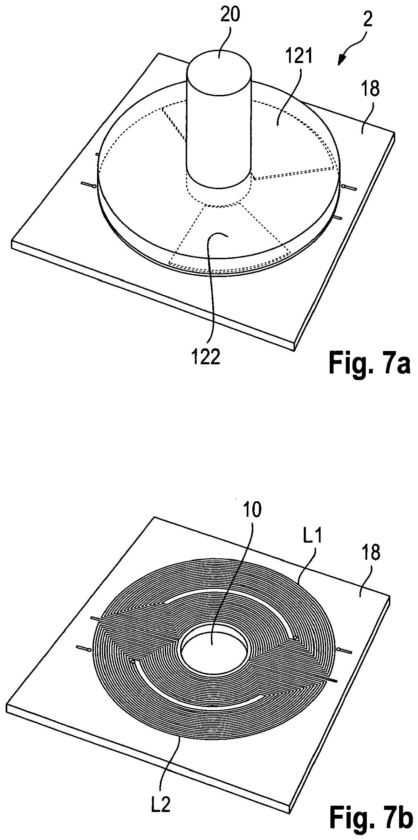

Figur 7 zeigt ein Ausführungsbeispiel für einen Drehwinkelsensor, der einen großen Winkelbereich abdeckt. Die geschieht durch Kombination mehrerer Referenzspulen. In einem in Figur 7b oben dargestellten äußeren Bereich liegt eine erste Referenzspule L1, deren Windungen in der unteren Hälfte von außen nach innen in einen der zentralen Fläche 10 benachbarten Abschnitt geführt sind. Entsprechend sind die Windungen einer zweiten Referenzspule L2 in dem in Figur 7b unteren Bereich außen und im oberen Bereich innen, also nahe der zentralen Fläche 10 geführt. Die erste und zweite Referenzspule L1, L2 sind ein integraler Bestandteil eines ersten Bauteils 18 des in Figur 7a gezeigten, in Form eines Drehwinkelgebers ausgestalteten Positionssensors 2. Ein zweites Bauteil 20 umfasst einen ersten und zweiten Referenzkörper 121, 122, welche jeweils einen Winkelbereich von ca. 120° abdecken und bezüglich des Umfangs des zweiten Bauteils 20 bei unterschiedlichen Drehwinkeln angeordnet sind.

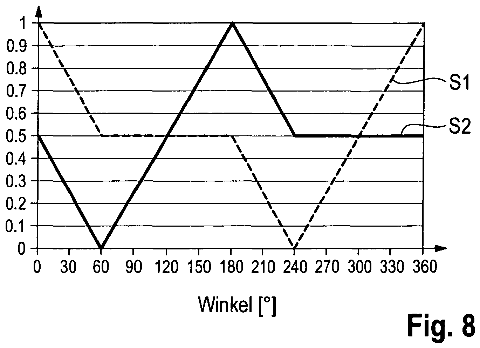

Figur 8 zeigt die an einem solchen Positionssensor 2 an der ersten und zweiten Referenzspule L1, L2 erfassbaren und auf einen Maximalwert beliebiger Einheit normierten Messsignale. Zu diesem Zweck kann z.B. die in Figur 1 gezeigte Schaltung doppelt ausgeführt sein, sodass die in der ersten und zweiten Referenzspule L1 und L2 auftretenden gedämpften Schwingungen separat ausgewertet werden können. In Figur 8 zeigt die gestrichelte Linie das durch Auswertung der in der ersten Referenzspule L1 vorliegenden Schwingung gewonnene Signal S1, die durchgezogene Linie zeigt das entsprechende Signal S2 für die zweite Referenzspule L2. Wie Figur 8 zu entnehmen ist, liefert die gezeigte Anordnung bei Drehwinkeln zwischen 0° und 270° Werte, denen eindeutig ein bestimmter Winkel zugeordnet werden kann. Durch Erweiterung der Anordnung auf weitere Erfassungsspulen und gegebenenfalls weitere Referenzkörper kann sowohl eine höhere Winkelauflösung als auch ein größerer Winkelbereich erzielt werden.

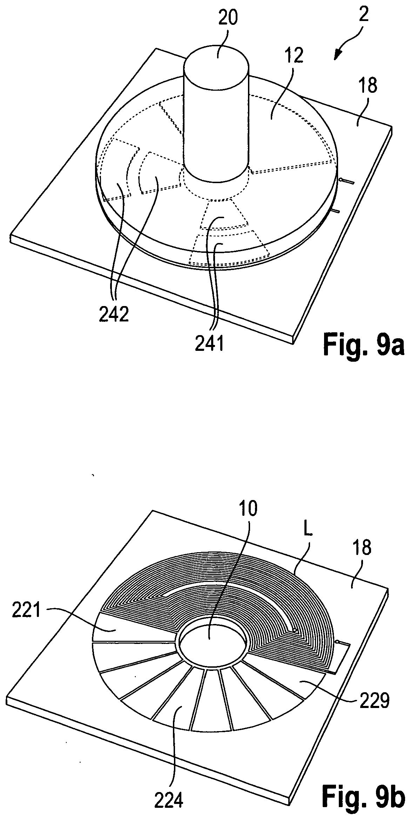

Figur 9 zeigt ein weiteres Ausführungsbeispiel für einen als Drehwinkelgeber ausgestalteten Positionssensor 2 (vgl. Figur 9a). Ein erstes Bauteil 18 (vgl. Figur 9b) umfasst eine sich entlang des halben Umfangs erstreckende Referenzspule L, von der beispielhaft nur einige wenige Windungen dargestellt sind. Diese schließen eine zentrale Fläche 10 ein, die sich entlang eines Teilsegments des Kreisumfangs erstreckt. Während sich die Referenzspule L in der oberen Hälfte erstreckt (vgl. Figur 9b), befinden sich in der unteren Hälfte des ersten Bauteils 18 kapazitive Elektroden 221 bis 229, von denen lediglich einzelne beispielhaft mit Bezugszeichen versehen sind. Im oberen Bereich des ersten Bauteils 18 wirkt die Referenzspule L mit einem Referenzkörper 12 zusammen, der in ein zweites Bauteil 20 (vgl. Figur 9a) integriert ist. Die im unteren Bereich des ersten Bauteils 18 angeordneten Elektroden 221 ... 229 wirken mit segmentierten Gegenelektroden 241, 242 zusammen und bilden einen kapazitiven Drehwinkelgeber aus. Somit bedient sich der in Figur 9 dargestellte Positionssensor zwei physikalisch verschiedener Winkelerfassungsmethoden. Er erfüllt also die Voraussetzungen für den Einsatz in sicherheitsrelevanten Bereichen, z.B. für einen Kfz-Lichtschalter. Der Winkelbereich ist auf 120° begrenzt, da dieser Bereich sowohl von dem induktiven Teil des Positionsgebers (Referenzspule L und Referenzkörper 12) als auch von dem kapazitiven Teil des Positionsgebers (Elektroden 221 ... 229 und Gegenelektroden 241 und 242) abgedeckt wird. Ebenso wie die Referenzspule L sind die Elektroden 221 ... 229 bevorzugt in das erste Bauteil 18 integriert, bei dem es sich bevorzugt um eine Leiterplatte handelt. Die einzelnen Elektroden 221 ... 229 sind gegeneinander isoliert.

Je nach Lage des zweiten Bauteils 20 bilden zwei oder mehrere benachbarte Elektroden 221 ... 229 mit den Gegenelektroden 241, 241 einen kapazitiven Kurzschluss. Die Winkellage des zweiten Bauteils 20 kann erfasst werden, in dem diejenigen Elektroden bestimmt werden, die an diesem kapazitiven Kurzschluss beteiligt sind. Ein typisches kapazitives Erfassungsverfahren besteht darin, der Reihe nach eine elektrische Ladung in die Elektroden 221 ... 229 einzuspeisen und zu prüfen, ob sich auf einer der Nachbarelektroden Ladung angesammelt hat. Ist dies der Fall, so wird die entsprechend gespeiste Elektrode 221 ... 229 und deren benachbarte Elektrode zumindest teilweise von derselben Gegenelektrode 241, 242 überdeckt. Bei der beispielhaft in Figur 9 gezeigten Winkelposition sind die Elektrodenpaare 221, 222 und 226, 227 von den Gegenelektroden 242 bzw. 241 überdeckt. Weitere Einzelheiten des kapazitiven Erfassungsverfahrens gehen aus der Anmeldung DE 10 2010 046 778 desselben Anmelders hervor

Gleichzeitig kann die Winkelposition anhand der in dem Referenzkörper 12 induzierten Wirbelstromverluste detektiert werden. Die Gegenelektroden 241, 242 sind geschlitzt ausgeführt, sodass diese auf das aus der Referenzspule L abgeleitete Signal nur geringen Einfluss haben. Das von der Referenzspule L erzeugte Feld tritt mehr oder weniger ungehindert durch die Gegenelektroden 241, 242 hindurch. Die ermittelten Drehwinkel beider Erfassungsverfahren (induktiv und kapazitiv) können verglichen und somit auf Plausibilität überprüft werden.

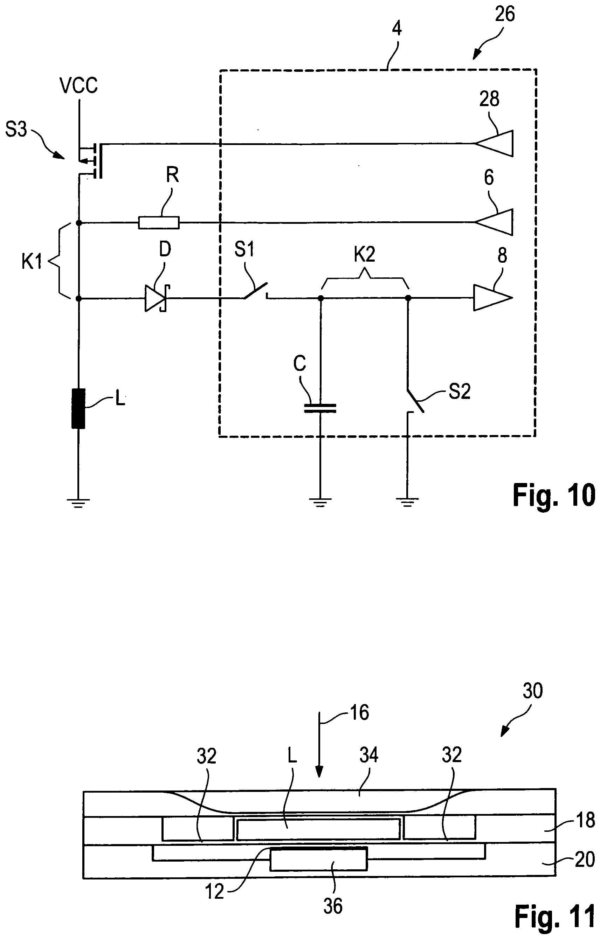

Figur 10 zeigt ein vereinfachtes Schaltbild einer Aktor-Sensor-Vorrichtung 26 gemäß einem weiteren Ausführungsbeispiel. Das gezeigte Schaltbild entspricht demjenigen in Figur 1, wobei der Mikrocontroller 4 nun anstatt eines Ausgangs 6 einen weiteren Ausgang 28 aufweist. Außerdem ist ein dritter Schalter S3, bei dem es sich bevorzugt um einen MOSFET handelt, zwischen eine Versorgungsspannung VCC und den ersten Knoten K1 geschaltet. Für den Fall, dass ein MOSFET als dritter Schalter S3 verwendet wird, ist dessen Schaltkanal zwischen die Versorgungsspannung VCC und den ersten Knoten K1 geschaltet und der weitere Ausgang 28 des Mikrocontrollers 4 ist mit dem Gate des MOSFETs verbunden.

Die gezeigte Aktor-Sensor-Vorrichtung 26 erlaubt eine rückgekoppelte Regelung zwischen einem Aktor und einem Positionssensor. Dies soll beispielhaft an dem in Figur 11 in vereinfachter Querschnittsansicht gezeigten Drucktaster 30 erläutert werden. Ein erstes Bauteil 18 dieses Drucktasters 30 umfasst eine schematisch dargestellte Referenzspule L, die bevorzugt in einem durch Stege 32 mit dem übrigen Teil des ersten Bauteils 18, bei dem es sich bevorzugt um eine Leiterplatte handelt, verbundenen Teilbereich dieses ersten Bauteils 18 untergebracht ist. Dieser Teilbereich des ersten Bauteils 18 ist über eine Mulde 34 mit einer in vertikaler Richtung 16 wirkenden Kraft beaufschlagbar, sodass der Abstand zwischen der Referenzspule L und einem in dem zweiten Bauteil 20 des Drucktasters 30 untergebrachten Referenzkörpers 12 in vertikaler Richtung 16 verringert werden kann. Außerdem befindet sich, bevorzugt als ein integraler Bestandteil des zweiten Bauteils 20, ein Permanentmagnet 36 in vertikaler Richtung 16 unterhalb der Referenzspule L. Verändert sich nun beispielsweise durch mechanischen Druck auf die Mulde 34 der Abstand zwischen der Referenzspule L und dem Referenzkörper 12, so kann an dem Eingang 8 der in Figur 10 gezeigten Aktor-Sensor-Vorrichtung 26 aufgrund der bereits erwähnten Vorgänge ein auf diese Abstandsverringerung hinweisendes Signal detektiert werden. Gleichzeitig kann dem Benutzer über den Aktorenteil der Aktor-Sensor-Vorrichtung 26 (d.h. des Drucktasters 30) eine haptische Rückmeldung gegeben werden. Dies erfolgt, indem über den weiteren Ausgang 28 ein Stromimpuls über den dritten Schalter S3 an die Referenzspule L angelegt wird. Da die Feldlinien des Permanentmagneten 36 die Referenzspule L durchsetzen, ergibt sich je nach Richtung des an die Referenzspule L angelegten Stroms eine abstoßende oder anziehende Kraftwirkung zwischen dem zentralen Bereich des ersten Bauteils 18 (welcher die Referenzspule L umfasst) und dem zweiten Bauteil 20 des Drucktesters 30. Bevorzugt kann durch wechselweises Ansteuern der Referenzspule L mit einem von der Spannungsversorgung VCC ausgehenden stärkeren niederfrequenten Strom (durch Steuerung des Schalters S3) eine Aktorfunktion und durch Ansteuern der Referenzspule L mit einem schwächeren hochfrequenten Signal ein sehr kompakter und kostengünstiger Drucktaster mit haptischer Rückmeldung realisiert werden. Bezüglich des Aktorenteils der gezeigten Aktor-Sensor-Vorrichtung 26 wird auf die DE 10 2010 045 536 das gleichen Anmelders verwiesen.

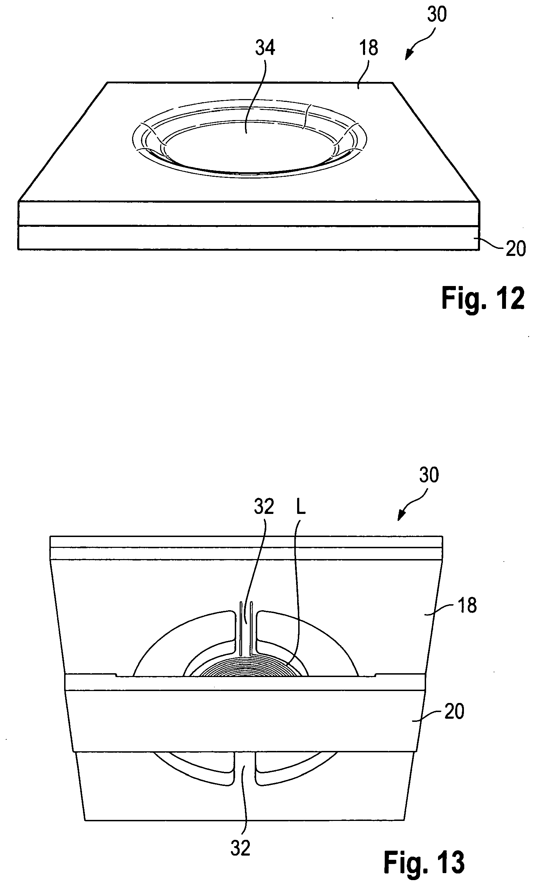

Figur 12 zeigt zur weiteren Erläuterung den Drucktaster 30 in einer perspektivischen Ansicht von dessen Oberseite. Figur 13 zeigt den Drucktaster 30 von seiner Unterseite. Lediglich das erste Bauteil 18 ist vollständig dargestellt, das zweite Bauteil 20 ist nur teilweise gezeigt, um die in den ersten Teil 18 integrierte und über Stege 32 gehaltene Referenzspule L zu zeigen.

### Bezugszeichenliste

- 2: Positionssensor
- 4: Steuer- und Verarbeitungseinheit
- 6: Ausgang
- 8: Eingang
- 10: zentrale Fläche
- 12: Referenzkörper
- 121: erster Referenzkörper
- 121: zweiter Referenzkörper
- 14: laterale Richtung
- 16: vertikale Richtung
- 18: erster Bauteil
- 20: zweiter Bauteil
- 221 ... 229: Elektroden
- 241 ... 242: Gegenelektroden
- 26: Aktor-Sensor-Vorrichtung
- 28: weiterer Ausgang
- 30: Drucktaster
- 32: Stege
- 34: Mulde
- 36: Permanentmagnet
- L: Referenzspule
- L1: erste Referenzspule
- L2: zweite Referenzspule
- R: Widerstand
- C: Kondensator
- K1: erster Knoten
- K2: zweiter Knoten
- S1: erster Schalter
- S2: zweiter Schalter
- S3: dritter Schalter
- V1: Rechteckspannung
- V2: Spannung an der Referenzspule L
- V3: Spannung an dem Kondensator C
- VCC: Versorgungsspannung

## Patentansprüche

1. Positionssensor (2) zur induktiven Erfassung einer Position eines eine Referenzspule (L) umfassenden ersten Bauteils (18) bezüglich eines einen Referenzkörper (12) umfassenden zweiten Bauteils (20), der Positionssensor umfassend das erste Bauteil, eine äußere Beschaltung und eine Steuer- und Verarbeitungseinheit (4) mit einem Eingang (8) und einem Ausgang (6), die jeweils an die Referenzspule (L) gekoppelt sind, wobei die Steuer- und Verarbeitungseinheit (4) zur Abgabe eines einen Stromstoß in der Referenzspule (L) erzeugenden Ausgangssignals und zur Auswertung einer durch den Stromstoß in der Referenzspule (L) erzeugten gedämpften Schwingung als ein die Position des Referenzkörpers anzeigendes Eingangssignal ausgelegt ist, wobei der Stromstoß aufgrund des Zusammenwirkens parasitärer Kapazitäten der äußeren Beschaltung und der Referenzspule (L) in der Referenzspule (L) die gedämpfte Schwingung erzeugt.

2. Positionssensor (2) nach Anspruch 1, bei dem die Steuer- und Verarbeitungseinheit (4) zur Auswertung einer Amplitude der durch den Stromstoß in der Referenzspule (L) erzeugten Schwingung als das die Position des Referenzkörpers anzeigende Eingangssignal ausgelegt ist.

3. Positionssensor (2) nach Anspruch 1 oder 2, bei dem
a) der Ausgang (6) der Steuer- und Verarbeitungseinheit (4) und eine Seite der Referenzspule (L) mit einem ersten Knoten (K1) gekoppelt sind und,
b) zur Auswertung der in der Referenzspule (L) erzeugten Schwingung eine Diode (D) in Durchlassrichtung zwischen den ersten Knoten (K1) und einen mit dem Eingang (8) gekoppelten zweiten Knoten (K2) geschaltet ist und
c) ein Kondensator (C) zwischen den zweiten Knoten (K2) und ein festes Referenzpotenzial gekoppelt ist.

4. Positionssensor (2) nach Anspruch 3, bei dem ein Widerstand (R) zwischen den erstem Knoten (K1) und den Ausgang (6) gekoppelt ist.

5. Positionssensor (2) nach Anspruch 3 oder 4, bei dem ein erster Schalter (S1) zwischen die Diode (D) und den zweiten Knoten (K2) geschaltet ist.

6. Positionssensor (2) nach einem der Ansprüche 3 bis 4, bei dem ein zweiter Schalter (S2) zwischen den zweiten Knoten (K2) und ein festes Referenzpotenzial gekoppelt ist.

7. Positionssensor (2) nach einem der vorhergehenden Ansprüche, wobei der Ausgang (6) ein digitaler Ausgang der Steuer- und Verarbeitungseinheit (4) ist und diese bevorzugt zur Abgabe eines Rechtecksignals an diesem Ausgang (6) ausgelegt ist, und wobei der Eingang (8) an einen von der Steuer- und Verarbeitungseinheit (4) umfassten A/D-Wandler gekoppelt ist.

8. Positionssensor (2) nach einem der vorhergehenden Ansprüche, bei dem die Referenzspule (L) gebildet ist durch eine in eine Leiterplatte integrierte Flachspule aus Leiterbahnen oder in MID-Technik.

9. Positionssensor (2) nach einem der vorhergehenden Ansprüche, umfassend eine oder mehrere Referenzspulen (L, L1, L2), deren Wicklungen so geführt sind, dass diese einen Spulenkern definieren, der die Form des erzeugten Magnetfeldes derart bestimmt, dass bevorzugt eine laterale Verschiebung des Referenzkörpers (12) oder bevorzugt eine vertikale Verschiebung des Referenzkörpers (12) detektierbar ist

10. Positionssensor (2) nach einem der vorhergehenden Ansprüche, außerdem umfassend eine weitere Einheit zur Erfassung der Position zwischen dem ersten und dem zweiten Bauteil (18, 20), wobei die von der weiteren Einheit durchgeführte Erfassung auf einem von einer induktiven Positionserfassung verschiedenen physikalischen Messprinzip beruht.

11. Aktor-Sensor-Vorrichtung (26) umfassend einen Positionssensor (2) nach einem der vorhergehenden Ansprüche und einen Aktor, wobei als ein erstes von zwei gegeneinander wirkenden Teilen des Aktors ein Permanentmagnet (36) in das zweite Bauteil (20) integriert ist, dessen Magnetfeld die in das erste Bauteil (18) integrierte Referenzspule (L) durchsetzt, die das zweite der gegeneinander wirkenden Teile des Aktors bildet, und wobei ein dritter Schalter (S3) zwischen eine Versorgungsspannung (VCC) und den ersten Knoten (K1) geschaltet ist und die Steuer- und Verarbeitungseinheit (4) einen weiteren Ausgang (28) aufweist, der mit dem dritten Schalter (S3) zu dessen Steuerung gekoppelt ist.

12. Aktor-Sensor-Vorrichtung (26) nach Anspruch 11, bei dem die Steuer- und Verarbeitungseinheit (4) zur Regelung des Aktors in Reaktion auf die von dem Positionssensor (2) bestimmte Position zwischen dem ersten und zweiten Bauteil (18, 20) eingerichtet ist.

13. Verfahren zur induktiven Erfassung einer Position eines eine Referenzspule (L) umfassenden ersten Bauteils (18) bezüglich eines einen Referenzkörper (12) umfassenden zweiten Bauteils (20), wobei das Verfahren die folgenden Schritte umfasst:
a) Einkoppeln eines einen Stromstoß in der Referenzspule (L) erzeugenden Ausgangssignals in die Referenzspule (L).
b) Auswerten einer durch den Stromstoß in der Referenzspule (L) aufgrund des Zusammenwirkens parasitärer Kapazitäten der äußeren Beschaltung und der Referenzspule (L) erzeugten gedämpften Schwingung in der Referenzspule (L) als ein die Position des Referenzkörpers (12) bezüglich der Referenzspule (L) anzeigendes Eingangssignal.

14. Verfahren nach Anspruch 13, bei dem der Schritt des Auswertens eine Auswertung der Amplitude der durch den Stromstoß in der Referenzspule (L) erzeugten Schwingung umfasst.

15. Verfahren nach Anspruch 13 oder 14, bei dem eine Steuer- und Verarbeitungseinheit (4) mit einem Eingang (8) zum Empfang des die Position anzeigenden Eingangssignals an die Referenzspule (L) gekoppelt ist und ein Ausgang (6) der Steuer- und Verarbeitungseinheit (4) und eine Seite der Referenzspule (L) an einen ersten Knoten (K1) gekoppelt sind, wobei eine Diode (D) in Durchlassrichtung zwischen den ersten Knoten (K1) und einen mit dem Eingang (8) gekoppelten zweiten Knoten (K2) geschaltet ist und ein Kondensator (C) zwischen den zweiten Knoten (K2) und ein festes Referenzpotenzial gekoppelt ist, wobei der Schritt des Auswertens die Auswertung einer über dem Kondensator (C) anfallenden Spannung als die Position des Referenzkörpers (12) bezüglich der Referenzspule (L) anzeigendes Eingangssignal umfasst.

## Claims

1. A position sensor (2) for inductive detection of a position of a first component (18) comprising a reference coil (L) with respect to a second component (20) comprising a reference body (12), the position sensor comprising the first component, an outer wiring, and a control and processing unit (4) having an input (8) and an output (6), which each are coupled to the reference coil (L), wherein the control and processing unit (4) is designed for issuing an output signal generating a current impulse in the reference coil (L) and for evaluating a damped oscillation generated by the current impulse in the reference coil (L) as an input signal indicating the position of the reference body, the current impulse generating the damped oscillation in the reference coil (L) due to interaction of parasitic capacitances of the outer wiring and the reference coil (L).

2. The position sensor (2) according to claim 1, in which the control and processing unit (4) is designed for evaluating an amplitude of the oscillation generated by the current impulse in the reference coil (L) as the input signal indicating the position of the reference body.

3. The position sensor (2) according to claim 1 or 2, in which
a) the output (6) of the control and processing unit (4) and one side of the reference coil (L) are coupled to a first node (K1), and
b) for evaluating the oscillation generated in the reference coil (L), a diode (D) is connected in the forward direction between the first node (K1) and a second node (K2) coupled to the input (8), and
c) a capacitor (C) is coupled between the second node (K2) and a fixed reference potential.

4. The position sensor (2) according to claim 3, in which a resistor (R) is coupled between the first node (K1) and the output (6).

5. The position sensor (2) according to claim 3 or 4, in which a first switch (S1) is connected between the diode (D) and the second node (K2).

6. The position sensor (2) according to any of claims 3 to 4, in which a second switch (S2) is coupled between the second node (K2) and a fixed reference potential.

7. The position sensor (2) according to any of the preceding claims, wherein the output (6) is a digital output of the control and processing unit (4), and the latter is preferably designed for issuing a square-wave signal at this output (6), and wherein the input (8) is coupled to an A/D converter comprised by the control and processing unit (4).

8. The position sensor (2) according to any of the preceding claims, in which the reference coil (L) is formed by a flat coil of conductor paths integrated into a printed circuit board or in MID technology.

9. The position sensor (2) according to any of the preceding claims, comprising one or more reference coils (L, L1, L2), whose windings are guided such that the same define a coil core which determines the shape of the magnetic field generated such that preferably a lateral displacement of the reference body (12) or preferably a vertical displacement of the reference body (12) is detectable.

10. The position sensor (2) according to any of the preceding claims, in addition comprising a further unit for detecting the position between the first and the second component (18, 20), wherein the detection performed by the further unit is based on a physical measurement principle different from an inductive position detection.

11. An actuator-sensor device (26) comprising a position sensor (2) according to any of the preceding claims and an actuator, wherein as a first one of two parts of the actuator acting with respect to each other a permanent magnet (36) is integrated in the second component (20), whose magnetic field permeates the reference coil (L) which is integrated in the first component (18) and forms the second one of the parts of the actuator acting with respect to each other, and wherein a third switch (S3) is connected between a supply voltage (VCC) and the first node (K1), and the control and processing unit (4) includes a further output (28) which is coupled to the third switch (S3) for controlling the same.

12. The actuator-sensor device (26) according to claim 11, in which the control and processing unit (4) is configured for closed loop control of the actuator in response to the position between the first and the second component (18, 20) as determined by the position sensor (2).

13. A method for inductive detection of a position of a first component (18) comprising a reference coil (L) with respect to a second component (20) comprising a reference body (12), wherein the method comprises the following steps:
a) coupling an output signal generating a current impulse in the reference coil (L) into the reference coil (L),
b) evaluating a damped oscillation generated by the current impulse in the reference coil (L) due to interaction of parasitic capacitances of the outer wiring and the reference coil (L) in the reference coil (L) as an input signal indicating the position of the reference body (12) with respect to the reference coil (L).

14. The method according to claim 13, in which the step of evaluating comprises an evaluation of the amplitude of the oscillation generated by the current impulse in the reference coil (L).

15. The method according to claim 13 or 14, in which a control and processing unit (4) with an input (8) for receiving the input signal indicating the position is coupled to the reference coil (L), and an output (6) of the control and processing unit (4) and one side of the reference coil (L) are coupled to a first node (K1), wherein a diode (D) is connected in the forward direction between the first node (K1) and a second node (K2) coupled to the input (8), and a capacitor (C) is coupled between the second node (K2) and a fixed reference potential, wherein the step of evaluating comprises the evaluation of a voltage obtained over the capacitor (C) as the input signal indicating the position of the reference body (12) with respect to the reference coil (L).

## Revendications

1. Capteur de position (2) pour la détection inductive d'une position d'un premier composant (18) comprenant une bobine de référence (L) par rapport à un deuxième composant (20) comprenant un corps de référence (12), le capteur de position comprenant le premier composant, un câblage externe et une unité de commande et de traitement (4) qui présente une entrée (8) et une sortie (6) qui sont chacune couplée à la bobine de référence (L), l'unité de commande et de traitement (4) étant réalisée pour la sortie d'un signal de sortie générant une impulsion de courant dans la bobine de référence (L) et pour l'évaluation d'une oscillation atténuée générée par l'impulsion de courant dans la bobine de référence (L) en tant que signal d'entrée indiquant la position du corps de référence, l'impulsion de courant générant l'oscillation atténuée dans la bobine de référence (L) en raison de la coopération de capacités parasitaires du câblage externe et de la bobine de référence (L).

2. Capteur de position (2) selon la revendication 1, dans lequel l'unité de commande et de traitement (4) est réalisée pour l'évaluation d'une amplitude de l'oscillation générée par l'impulsion de courant dans la bobine de référence (L) en tant que signal d'entrée indiquant la position du corps de référence.

3. Capteur de position (2) selon la revendication 1 ou 2, dans lequel
a) la sortie (6) de l'unité de commande et de traitement (4) et un côté de la bobine de référence (L) sont couplés à un premier noeud (K1), et
b) une diode (D) est connectée dans le sens passant entre le premier noeud (K1) et un deuxième noeud (K2) couplé à l'entrée (8) pour l'évaluation de l'oscillation générée dans la bobine de référence (L), et
c) un condensateur (C) est couplé entre le deuxième noeud (K2) et un potentiel de référence fixe.

4. Capteur de position (2) selon la revendication 3, dans lequel une résistance (R) est couplée entre le premier noeud (K1) et la sortie (6).

5. Capteur de position (2) selon la revendication 3 ou 4, dans lequel un premier commutateur (S1) est connecté entre la diode (D) et le deuxième noeud (K2).

6. Capteur de position (2) selon l'une des revendications 3 à 4, dans lequel un deuxième commutateur (S2) est connecté entre le deuxième noeud (K2) et un potentiel de référence fixe.

7. Capteur de position (2) selon l'une des revendications précédentes, la sortie (6) étant une sortie numérique de l'unité de commande et de traitement (4), et celle-ci étant de préférence réalisée pour la sortie d'un signal rectangulaire à cette sortie (6), l'entrée (8) étant couplée à un convertisseur analogique-numérique compris dans l'unité de commande et de traitement (4).

8. Capteur de position (2) selon l'une des revendications précédentes, dans lequel la bobine de référence (L) est formée par une bobine plate constituée de pistes conductrices intégrée dans une carte de circuits imprimés ou par technologie MID.

9. Capteur de position (2) selon l'une des revendications précédentes, comprenant une ou plusieurs bobines de référence (L, L1, L2) dont les enroulements sont guidés de manière à définir un noyau de bobine qui détermine la forme du champ magnétique généré, de telle sorte que de préférence un déplacement latéral du corps de référence (12) ou de préférence un déplacement vertical du corps de référence (12) est détectable.

10. Capteur de position (2) selon l'une des revendications précédentes, comprenant en outre une unité supplémentaire pour la détection de la position entre le premier et le deuxième composant (18, 20), la détection réalisée par l'unité supplémentaire étant basée sur un principe de mesure physique différent d'une détection de position inductive.

11. Dispositif (26) d'actuateur et de capteur qui comprend un capteur de position (2) selon l'une des revendications précédentes et un actuateur, un aimant permanent (36) étant intégré dans le deuxième composant (20) en tant que première pièce parmi deux pièces de l'actuateur agissant l'une à l'encontre de l'autre, dont le champ magnétique traverse la bobine de référence (L) qui est intégrée dans le premier composant (18) et forme la deuxième pièce des pièces de l'actuateur agissant l'une à l'encontre de l'autre, et un troisième commutateur (S3) étant connecté entre une tension d'alimentation (VCC) et le premier noeud (K1), et l'unité de commande et de traitement (4) présentant une sortie (28) supplémentaire qui est couplée au troisième commutateur (S3) pour la commande de celui-ci.

12. Dispositif (26) d'actuateur et de capteur selon la revendication 11, dans lequel l'unité de commande et de traitement (4) est aménagée pour le réglage de l'actuateur en réponse à la position entre le premier et le deuxième composant (18, 20) telle que déterminée par le capteur de position (2).

13. Procédé de détection inductive d'une position d'un premier composant (18) comprenant une bobine de référence (L) par rapport à un deuxième composant (20) comprenant un corps de référence (12), le procédé comprenant les étapes suivantes :
a) le couplage d'un signal de sortie générant, dans la bobine de référence (L), une impulsion de courant dans la bobine de référence (L),
b) l'évaluation d'une oscillation atténuée dans la bobine de référence (L), générée par l'impulsion de courant dans la bobine de référence (L) en raison de la coopération de capacités parasitaires du câblage externe et de la bobine de référence (L) en tant que signal d'entrée indiquant la position du corps de référence (12) par rapport à la bobine de référence (L).

14. Procédé selon la revendication 13, dans lequel l'étape d'évaluation comprend l'évaluation de l'amplitude de l'oscillation générée par l'impulsion de courant dans la bobine de référence (L).

15. Procédé selon la revendication 13 ou 14, dans lequel une unité de commande et de traitement (4) est couplée à la bobine de référence (L) par une entrée (8) de réception du signal d'entrée indiquant la position, et une sortie (6) de l'unité de commande et de traitement (4) ainsi qu'un côté de la bobine de référence (L) sont couplés à un premier noeud (K1), une diode (D) étant connectée dans le sens passant entre le premier noeud (K1) et un deuxième noeud (K2) couplé à l'entrée (8), et un condensateur (C) étant couplé entre le deuxième noeud (K2) et un potentiel de référence fixe, l'étape d'évaluation comprenant l'évaluation d'une tension produite sur le condensateur (C) en tant que signal d'entrée indiquant la position du corps de référence (12) par rapport à la bobine de référence (L).
